# EUROPEAN PATENT APPLICATION

(11) **EP 3 024 192 A1**
(43) Date of publication of application: **25.05.2016**
(21) Application number: 14194559.2
(22) Date of filing: 24.11.2014
(51) Int. Cl.: H04L 29/06, G05B 23/02, G06Q 10/06

(54) **Analysing security risks of an industrial automation and control system**

(71) Applicant: ABB Technology AG, 8050 Zürich (CH)
(72) Inventor: Obermeier, Sebastian, 5107 Schinznach-Dorf (CH); Schlegel, Roman, 5430 Wettingen (CH)
(74) Representative: ABB Patent Attorneys

(57) **Abstract**

An industrial automation and control system (14) comprises communicatively interconnected components (16) for operating an industrial process and/or plant (10). A method for analysing security risks of the industrial automation and control system (14) comprises: identifying at least one security relation (22) between at least one component (16) of the system, at least one security threat (24) affecting the component (16) and at least one security control element (20) for mitigating the security threat (24); storing the at least one security relation (22); during operation of the system (14), observing a change of a security control element (20) of the system (10); and updating a security risk of at least one component (16) of the system (14) based on the security relation (22) and the observed change of the security control element (20).

## Description

### FIELD OF THE INVENTION

The invention relates to the field of cyber security in process automation. In particular, the invention relates to a method, a computer program and a computer-readable medium for analysing security risks of an industrial automation and control system. Furthermore, the invention relates to an industrial automation and control system.

### BACKGROUND OF THE INVENTION

During the planning phase of an industrial automation and control system, which operates industrial processes and facilities such as a power plant or a manufacturing plant, threat models for Information Technology (IT) or cyber security threats against such systems are created. These threat models typically target conceptual threats, and are usually only revisited during the development lifecycle. In contrast, threat models for implemented systems may be more detailed compared to the more generic planning threat models. In addition, threat models typically change over time due to the identification of new threats; even changes in the political environment may change the threat landscape (e.g., due to ecological activists).

The standard IEC 62443/ISA99 is a cyber-security standard for industrial automation and control systems and also recommends threat analysis. However, in this standard this is done once to get an overview.

In general, a system-wide threat model is typically created once to get an insight into existing system threats, or because it is mandated by a standard. However, the knowledge captured in the threat model may be lost after some time, especially if the operators are not security specialists and the document/threat model is not frequently used.

Furthermore, usually over time, more and more security control elements such as firewalls, intrusion detection systems, password vaults and logging mechanisms are installed at the process and/or plants site. However, the threat model is typically not updated, especially when it is a document that has been prepared by a third party, e.g., a security consulting company. The threat model may therefore become more and more obsolete as time progresses.

In addition, whenever a security control element fails, for example due to a hardware error, it may be difficult to determine which threats are no longer mitigated, and for which risks there are still additional compensating controls.

### DESCRIPTION OF THE INVENTION

It is an objective of the invention to maintain an updated threat model of an industrial automation and control system. It is a further object of the invention to provide an up-to-date threat model of such a system.

This objective is achieved by the subject-matter of the independent claims. Further exemplary embodiments are evident from the dependent claims and the following description.

An aspect of the invention relates to a method for analysing (cyber) security risks of an industrial automation and control system, the industrial automation and control system comprising communicatively interconnected components for operating an industrial process and/or plant.

The components may be intelligent electronic devices (IEDs), programmable logic controllers (PLC) and communication equipment for interconnecting these devices. For example, the industrial process may be the process in a chemical plant. The plant may be a chemical, mechanical and/or electrical plant, for example a power station or a power plant.

According to an embodiment of the invention, the method comprises: identifying at least one security relation between at least one component of the system, at least one security threat affecting the component and at least one security control element for mitigating the security threat; storing the at least one security relation; during operation of the system, observing a change of a security control element of the system; and updating a security risk of at least one component based on the security relation and the observed change of the security control element.

The method also may be seen as a method of assessing a (cyber) security risk of the system. Prior to and/or during the operation of the system, one or more security relationships may be identified. This may be done manually with a user interface of a respective configuration tool and/or automatically via an update of the one or more security relationships, for example via an external communication network.

The security relation may model the relationship of components of the system, of security threats, of security control elements and/or of impacts of a security threat and/or may be seen as a (cyber) security model of the system. A security relationship may comprise one or more of the following relations: a component is affected by an impact, a component uses a security control element, an impact concerns a security threat, a security control element mitigates a security threat, and/or a security control element is implemented by a security control product.

The identified security relations may be stored in a machine-readable format (for example in a relational database or impact matrix) such that a controller and/or computer of the system may access and evaluate the security relations automatically during the operation of the system.

When the system is operating, this controller and/or computer may automatically observe a change of a security control element (for example such that a security control element is added, removed or has crashed, when it is a software control element) and automatically may update security risks for the affected components.

A change of a security control element may be observed automatically with a monitoring system (such as Nagios©) and/or through other options. Also, a third party tool that configures security controls (such as Tufin© for firewall configuration management) may be used. It also may be possible to directly query the security control elements (for example via SNMP) to retrieve their actual configuration. For example, if a security control element that has been previously seen on the communication network of the system does not respond, it may be assumed that it has failed and thus a removal of the security control element may be detected. For new (added) security control elements, the communication network may be scanned and added security control elements may be detected.

A security risk may be a probability value or may be a traffic light (red, yellow, green) indicating the severity of a malfunction of the component, in the case, the corresponding security threat really occurs. A risk may be based on a product of an impact severity and a security threat likelihood.

Summarized, with the method, security risk, which may be displayed to a human operator or which may be used for issuing an alarm, may be automatically updated, when the security control element of the systems changes.

The method may be used for real-time monitoring of a threat mitigation landscape of the system. In particular, whenever a security control element fails, the method may assess the consequences of that failure in real-time and immediately display a list of security threats that are no longer mitigated. In addition, the information may include an assessment on the gravity of the consequences, indicating to an operator, whether a failed security control element is critical and needs to be fixed immediately, or whether there is a window of opportunity of perhaps several days within which the security control element may be fixed without undue risk in the meantime. The resulting impact may also be compared to a risk policy to decide what action should be taken and within which time frame.

For determining the criticality of a failed (or more general a changed) security control element, a security threat may be assigned to a severity category, such as low, medium and high severity. Whenever a security control element mitigates a high severity threat, the security control element may be considered critical, especially if no other security control element mitigates the threat.

The security relations also may be used for lifecycle-integrated threat modelling across the whole lifecycle of a process or a plant, from design and engineering to operation. When a process or plant is first designed, a corresponding security threat model may be created that associates security threats with security control elements that mitigate them. This threat model may be used when designing and engineering a complete process or plant to decide which security control elements should be implemented to defend against the different security threats. Any change in the design may immediately be verified against the threat model to determine how the threat mitigation landscape of the whole process or plant is affected. Once the process or plant has been constructed and is in operation, the threat model may then be used for real-time monitoring of the threat mitigation landscape as described above.

Furthermore, although individual industrial automation and control systems may vary in different processes or plants, the components, security control elements and threats may be similar for different processes or plants. Thus, a predefined set of security control elements, threats and components may be used, when starting to define the security relations of a new system.

According to an embodiment of the invention, the method further comprises: updating the at least one security relation during operation of the system and determining the security risk based on the updated security relation. For example, new security threats may be defined, which then immediately may result in new security risks.

According to an embodiment of the invention, the security relation comprises information about at least one impact of a security threat on a component. In the simplest case, the impact only may be provided as "present" and "not present". I.e. the security relation only encodes, whether there is an impact at all. In general, the security risk may be determined based on the impact.

According to an embodiment of the invention, the security threat comprises a threat probability and the impact comprises an impact severity and the security risk is determined based on the threat probability and the impact severity. For example, the security risk of a component of the system may be based on all products of impact severities and threat probability associated with the security threats of the component. Security threats may be qualified with their probability, while impacts (which may be associated to a combination of a security threat and a component) may be qualified with a severity value. Combining a threat probability and an impact severity may allow to generate a quantitative (approximate) security risk value.

According to an embodiment of the invention, for observing an operational change of a security control, operational data from the security control element is received and/or queried via a communication network of the system. For example, the controller performing the method as described in the above and in the following may gather information sent by the security control elements and/or are may regularly query all security control elements with respect to the operation state. The controller and/or computer may then update the security risks of the system, whenever it discovers a change of a security control element. While the system is in operation, the controller may continuously assess the threat mitigation of the components of the system, such that when a security control element fails, for example because of a hardware failure, the controller may immediately calculate the consequences, i.e., which security threats are no longer mitigated.

According to an embodiment of the invention, the security control element is a subcomponent of a component of the system. Usually, the components of the system may comprise security control elements as part of their configuration. A security control element may comprise hardware (such as a crypto chip) and/or may comprise software (such as antivirus software).

According to an embodiment of the invention, a component of the system is an electronic device for controlling an electric and/or mechanic device of the industrial process. The components may be intelligent electronic devices that are interconnected via an internal communication network of the plant. Such components may be controllers of electric switches, pumps, motors, valves, etc. Further components of the systems may be electronic devices for communicatively interconnecting the intelligent electronic devices, such as routers, repeaters, network switches, etc.

According to an embodiment of the invention, the at least one security relation is stored in a relational database. Information on components, security threat, security control elements and impacts as well as their relationships may be stored in tables. Only a relational database is required for storing the complete threat model.

According to an embodiment of the invention, a change of a security control element of the system is at least one of: a failure of a security control element, changed settings of a security control element, an addition of a security control element and/or a removal of a security control element. Every status change of a security control element may be used for updating the security risks associated with the respective security control element.

According to an embodiment of the invention, the method further comprises: displaying an updated security risk to an operator of the industrial automation and control system, or otherwise visualizing within the industrial automation and control system software the new security risk and the change of the security control element. Whenever the controller performing the methods determines an updated security risk and in particular a raised security risk, it may inform a human operator about the higher security risk.

According to an embodiment of the invention, the method further comprises: sending an updated security risk to an alarm management system for creating alarms. For example, whenever a security risk is updated to a higher value, this security risk may be sent to a system, which for example may issue an alarm, when a predefined number of raised security risks has been reached.

According to an embodiment of the invention, the method further comprises: automatically determining changed security settings for a further security control element based on the determined security risk. The changed security settings may be applied to the further security control element via a communication network of the system. The method also may be used to automatically determine security settings based on the current run-status of security control elements. For example, if a security control element fails, the individual security settings of other security control elements should be strengthened. As a specific example, if a network intrusion prevention system fails, it may be determined that the security threat for network related attacks is no longer mitigated. An enhanced monitoring of this threat may be required, which may be fulfilled by a stricter rule-set of the intrusion detection system, accepting a higher false positive alarm rate.

A further aspect of the invention relates to a computer program for analysing security risks of an industrial automation and control system, which, when being executed by a processor, is adapted to carry out the steps of the method as described in the above and in the following. For example, one component of the industrial automation and control system may be a computer that is communicatively connected with the other components of the system via an internal data communication network of the plant and that executes the program. However, it also may be possible that the computer or controller executing the program may be remote from the plant. For example, it may be connected with the industrial automation and control system via the Internet.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to an industrial automation and control system comprising at least one controller for performing the method as described in the above and in the following. The threat model provided by the security relation may be integrated into the system. Integration may mean that the threat modelling is coupled to the control system and uses the data of it. If the system is accessible remotely, the threat model may be accessed remotely.

It has to be understood that features of the method, the computer program and the computer-readable medium as described in the above and in the following may be features of the system as described in the above and in the following and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows an industrial automation and control system according to an embodiment of the invention.
Fig. 2 schematically shows a data model used by the system of Fig. 1.
Fig. 3 shows a flow diagram for a method for analysing security risks according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

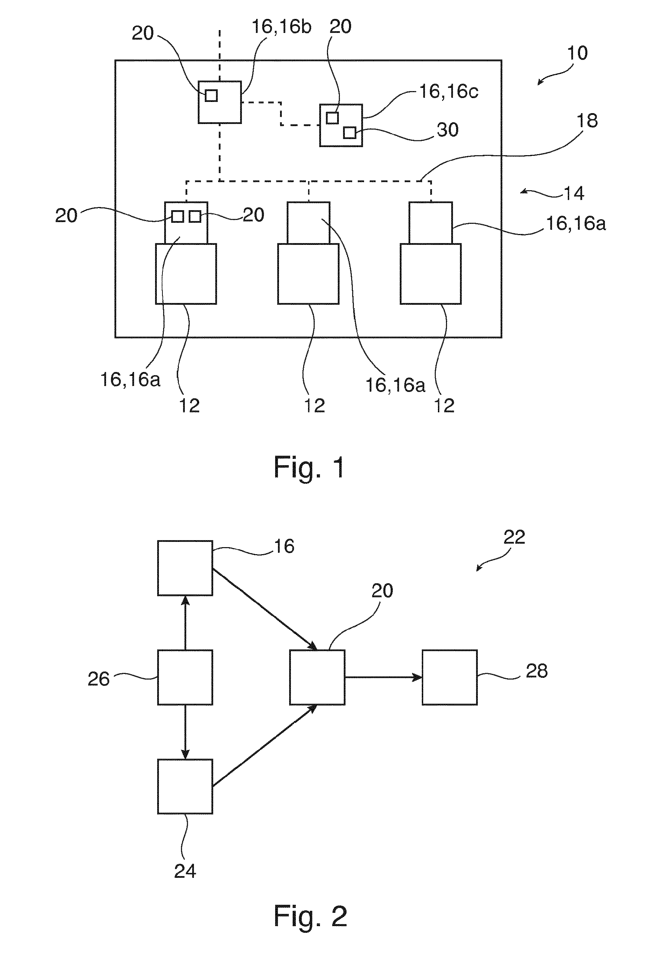

Fig. 1 shows a plant 10 (for example a power station) with devices 12 (such as electrical switches, pumps, valves, etc.), which are controlled by an industrial automation and control system 14. The system 14 comprises components 16, which are connected by an internal communication network 18 of the plant. For example, the components 16 comprise intelligent electronic devices 16a for controlling the devices 12, network devices 16b for supporting the communication in the network 18 and further controllers/computers 16c that, for example, are adapted for performing high-level control tasks, alarm monitoring and processing user input. Some or all of the components 16 may comprise security control elements 20, such as antivirus software, crypto chips, etc.

In the following it will be assumed that the controller 16c also performs the method for analysing security risks as described in the above and in the following. For example, the controller 16c may be a station computer.

Fig. 2 shows a data model for modelling security relations 22 between components 16, a security control element 20, security threats 24 and impacts 26. A security control element 20 may be implemented by a security control product 28. The data model of Fig. 2 and the security relations 22 may be implemented in a relational database 30, which may be accessed in system 14 from the controller 16.

The main objects of the data model are components 16 (for example an intelligent electronic device 16a, a station computer 16c, etc.), security threats 24 (for example network sniffing) and security control elements 20 (for example antivirus application, network intrusion detection system, etc.). Security control elements 20 may be embodied by specific products 28 (for example McAfee for Antivirus©). A component 16 may be affected by a security threat 24, which produces a specific impact 26 (for example, malware on a station computer can influence the control process).

Furthermore, a security threat 24 may be mitigated by a security control element 20, for example malware may be mitigated by antivirus. Additionally, a component 16 may have one or more security control elements 20 implemented.

It is important to note that the data model may not be a direct replacement for an in-depth threat modelling performed on a single component (for example an in-depth threat modelling of an IED). An individual, in-depth threat modelling may inform the (static) design of a component, while the method using the data model of Fig. 2 may dynamically assess the threat mitigation landscape of the system 14, taking into account the relevant security threats 24 and the security control elements 20 that are installed on or near components 16.

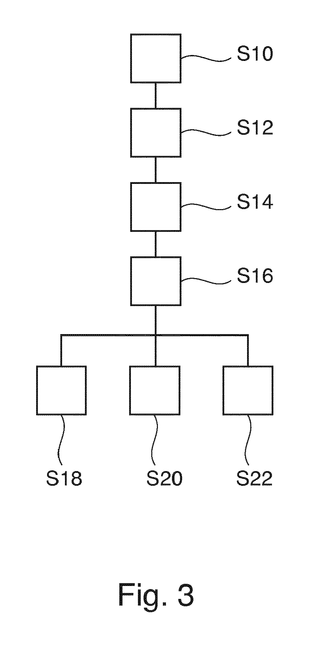

Fig. 3 shows a flow diagram for a method for analysing security risks.

In step S10, at least one security relation 22 between at least one component 16, at least one security threat 24 affecting the component 16 and at least one security control element 20 for mitigating the security threat is identified.

The security relations 22 may be either identified manually, for example by a human operator at the controller 16 or may be identified automatically, for example by an update of the database.

With a graphical user interface (GUI) of the controller 16, the security relations 22 may be manually edited by adding, deleting and editing components 16, security threats 24, impacts 26, security control elements 20 and security products 28 as well as their relationships.

With the GUI, components 16 may be identified by inputting their name, description and/or their network identifier. Examples for components 16 are a process bus, an engineering PC, an event printer, a firewall, a virtual private network.

Every component 16 may be assigned to one ore more security control elements 20 and therefore may have a list of implemented security control elements 20.

Also security control elements 20 may be added, removed or edited with the GUI. For example, a security control element 20 may have a name and a description.

Examples for such security control elements are: antivirus, application whitelist, central user account management, secure communication and configuration access, user activity login, configuration review, configuration/control-application signing, crypto chip, device robustness testing, firmware signing, host-based intrusion detection system, host-based intrusion prevention system, network access control, network intrusion detection, password vault, software code signing, virtual execution malware prevention.

Similarly, security threats 24 may be identified by inputting their name and/or description. Examples for security threats 24 are adware, buffer overflow exploit, configuration error, data packet manipulations, denial of service, flooding, GPS jamming, GPS spooling.

Every security threat 24 may be assigned to one or more security control elements 20 and may have a list of security control elements 20 that mitigate the security threat.

A security threat 24 also may be assigned to a likelihood or probability (such as low, medium, high) of the security threat 24.

For initially threat modelling of a system 10, it may be sufficient to consider types of components (for example an IED, a station computer, a network switch, etc.) and model the security threats 24 generally device-type by device-type. For a real-time monitoring, the types of components may be extended to instances of components (for example a specific IED among 20 identical IEDs). This may allow to specify a security control element 20 on a specific instance of a component 16 that has failed, and may assess the consequences for that specific component 20, not for all components 16 of the same type.

A security threat 24 may have a specific impact 26 on a component 16. The impact 62 may be yes or no. It also may have a severity, a description, etc., which may be edited with the GUI. There may be security threats 24 that have different impacts 26 on different components 16: A denial-of-service attack (=security threat) executed on an IED (=component) may have a severe impact, while executed on a station printer, the impact may be rather low.

In step S12, the security relations 22 are stored in a database 30 of the system 10. The controller 16c then may evaluate the information in the database 30.

For example, the impact 26 of a security threat 24 on a component 16 may be mitigated by a security control element 20 that is assigned to the same security threat and the same component. If there are impacts 26 that are not mitigated, the GUI may provide suggestion, which security control elements may be implemented to mitigate the remaining unmitigated impacts. An analysis algorithm may use the information stored in the database 30 to derive a threat mitigation landscape. To determine whether a security threat 24 that affects a certain component 16 has been mitigated or not, the algorithm may check which security control elements 20 can mitigate the security threat 24 and then may check whether the affected component 16 implements these security control elements 20. If yes, the security threat 24 may be considered to be mitigated. If the component 16 does not implement any of the respective security control elements 20, the security threat 24 may be considered to be unmitigated.

Additional analysis algorithms may take also the severity of an impact 26 and the likelihood of a security threat 24 into account to prioritize the security threats 24 according to a likelihood/severity risk assessment.

In step S14, during operation of the system, the controller 16c monitors the security control elements 20 until it observes a change of a security control element 20. For example, the controller 16c may query status and/or configuration information of the security control elements 20 via the network 18. It simply may query for the presence of a security control element 20 and/or it may receive status information from the security control elements 20.

For example, when one security control element 20 fails, is added to the system 14, is removed from the system 14 or changes its configuration, the controller 16c may observe such a change.

In step S16, the controller 16c updates a security risk of at least one component 16 based on the security relations 22 and the observed change of the security control element 20. The security threat 24 may comprise a threat probability and the impact may comprise an impact severity. For example, the security risk may be determined based on the threat probability and the impact severity. The security risk of a component 16 having a security threat 24 with low probability and with low impact severity also may be low.

The security risks also may be updated when other parts of the security relation 22 changes, for example when a new security threat 24 is added, when components 16 are added or removed to the system 10.

For example, if a new security vulnerability becomes known, the security threats 24 may be automatically updated. A patch removing this vulnerability may be seen as a security control element 20. However, as long as the patch is not applied, the security risk remains, and the threat model would represent this. When the patch is applied, the threat model would be updated, and this security threat 24 would have a mitigation and has therefore a lower security risk.

In step 18, the updated security risk is displayed to an operator of the industrial automation and control system 10. For example, the GUI of the controller 16c may show that a specific component has failed and that a corresponding security risk has become higher. For example, the security risks may be shown as traffic lights, whereas a high security risk is shown as a red traffic light.

In step S20, the updated security risk is sent to an alarm management system for creating alarms. For example, when a security risk rises above a predefined level (the traffic light turns red), the security risk also may be sent to a further system remote from the plant 10, where it may be used for creating an alarm.

The evaluation of the threat model may be integrated into an alarm management system in a manner that allows the system 10 to create operator alarms based on failed security mechanisms, including the context of the alarm within the system 10 (for example affected components 16) and specific recommendations on response actions.

In step S22, changed security settings are automatically determined for a security control element 16 based on the updated security risk. The changed security settings may be applied to the security control element 14 via the communication network 18. For example, if a network intrusion prevention system fails, it may be determined that the security threat 24 for network related attacks is no longer mitigated. An enhanced monitoring of this security threat 24 may be required, which may be fulfilled by a stricter rule-set of an intrusion detection system, accepting a higher false positive alarm rate.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: plant
- 12: device of plant
- 14: industrial automation and control system
- 16: component of industrial automation and control system
- 18: communication network
- 20: security control element
- 22: security relation
- 24: security threat
- 26: impact
- 28: security control product
- 30: database

## Claims

1. A method for analysing security risks of an industrial automation and control system (14), wherein the industrial automation and control system (14) comprises communicatively interconnected components (16) for operating an industrial process and/or plant (10), the method comprising:
identifying at least one security relation (22) between at least one component (16) of the system, at least one security threat (24) affecting the component (16) and at least one security control element (20) for mitigating the security threat (24);
storing the at least one security relation (22);
during operation of the system (14), observing a change of a security control element (20) of the system (10);
updating a security risk of at least one component (16) of the system (14) based on the security relation (22) and the observed change of the security control element (20).

2. The method of claim 1, further comprising:
updating the at least one security relation (22) during operation of the system (14);
updating the security risk (24) based on the updated security relation (22).

3. The method of claim 1 or 2,
wherein the security relation (22) comprises information about at least one impact (26) of a security threat (24) on a component (16);
wherein the security risk (24) is determined based on the impact (26).

4. The method of claim 3,
wherein the security threat (24) comprises a threat probability and the impact (26) comprises an impact severity and the security risk is determined based on the threat probability and the impact severity.

5. The method of one of the preceding claims,
wherein for observing a change of a security control element (20), operational data from the security control element (20) is received and/or queried via a communication network (18) of the system (10).

6. The method of one of the preceding claims,
wherein the security control element (20) is a subcomponent of a component (16) of the system (14).

7. The method of one of the preceding claims,
wherein a component (16) of the system (14) is an electronic device (16a) for controlling an electric and/or mechanic device of the industrial process; and/or
wherein a component (16) of the system (14) is an electronic device (16b) for communicatively interconnecting other electronic devices.

8. The method of one of the preceding claims,
wherein the at least one security relation (22) is stored in a relational database (30).

9. The method of one of the preceding claims,
wherein a change of a security control element (20) of the system is at least one of:
a failure of a security control element;
changed settings of a security control element;
an addition of a security control element;
a removal of a security control element.

10. The method of one of the preceding claims, further comprising:
displaying an updated security risk to an operator of the industrial automation and control system (10).

11. The method of one of the preceding claims, further comprising:
sending an updated security risk to an alarm management system for creating alarms.

12. The method of one of the preceding claims, further comprising:
automatically determining changed security settings for a security control element (16) based on the updated security risk; and/or
applying the changed security settings to the security control element (16) via a communication network (18) of the system (14).

13. A computer program for analyzing security risks of an industrial automation and control system, which, when being executed by a processor, is adapted to carry out the steps of the method of one of claims 1 to 12.

14. A computer-readable medium, in which a computer program according to claim 13 is stored.

15. An industrial automation and control system (10) comprising at least one controller (16c) for performing the method of one of claims 1 to 12.
